(19) Europäisches Patentamt
European Patent Office
Office européen des brevets

(11)  **EP 1 770 258 B1**

(12)  # EUROPEAN PATENT SPECIFICATION

(45) Date of publication and mention
of the grant of the patent:
**13.08.2008   Bulletin 2008/33**

(51) Int Cl.:
**F02B 27/02** *(2006.01)*      **F02B 75/20** *(2006.01)*

(21) Application number: **05109144.5**

(22) Date of filing: **03.10.2005**

(54) **A method for a variable air intake system and an internal combustion engine comprising a variable air intake system.**

Verfahren für ein variables Ansaugsystem und Brennkraftmaschine mit einem variablen Ansaugsystem

Méthode pour un système d'admission à géométrie variable et moteur à combustion interne avec système d'admission à géomètrie variable

(84) Designated Contracting States:
**DE GB SE**

(43) Date of publication of application:
**04.04.2007   Bulletin 2007/14**

(73) Proprietor: **Ford Global Technologies, LLC
Dearborn, MI 48126 (US)**

(72) Inventors:
• **Möller, Peter
431 68, Mölndal (SE)**
• **Svenske, Erik
412 72, Göteborg (SE)**

(74) Representative: **Holmberg, Magnus et al
Albihns AB
P.O. Box 5581
114 85 Stockholm (SE)**

(56) References cited:
**DE-A1- 19 727 669        DE-B3- 10 346 734**

• **PATENT ABSTRACTS OF JAPAN vol. 011, no. 098 (M-575), 27 March 1987 (1987-03-27) & JP 61 247822 A (MAZDA MOTOR CORP), 5 November 1986 (1986-11-05)**

## Description

TECHNICAL FIELD

The present invention refers to a method for diagnosing a variable air intake system of an internal combustion engine, and an internal combustion engine comprising a variable air intake system.

BACKGROUND

In known art, a number of methods for diagnosing valve functions in a non-variable engine air intake manifold have been suggested, see for example US5138874A.

A variable air intake system for a combustion engine, for example as described in US5638785A, usually comprises valves for guiding the intake air through conduits in dependence of the engine speed. For the function of such systems, it is critical that the valves are fully operational according to the design intentions of the system, i.e. that they open and close to guide the airflow as desired. Sensor deviations can cause erroneous diagnose and affect the operation of the engine negatively.

D1 discloses a method for diagnosing a variable air intake system of an internal combustion engine, in particular to regulate the length of the intake manifold. The diagnosis is based on the difference between the measured pressure and a calculated pressure at the intake manifold, determined for at least two positions of the manifold flap.

SUMMARY

The object of the invention is to provide a large degree of certainty regarding diagnose information obtained regarding a variable air intake system of an internal combustion engine.

This object is reached with a method for diagnosing a variable air intake system of an internal combustion engine, comprising the steps of

- determining a first value of an air intake related parameter at a first engine speed,
- determining a second value of the air intake related parameter at a second engine speed,
- comparing the first and second values of the air intake related parameter, and
- establishing, based on the comparison of the first and second values of the air intake related parameter, a functional status of the variable air intake system.

Since the method according to the invention monitors the function of the variable air intake system by comparing two air intake related parameter values at respective engine speeds, the result is a low dependency of sensor tolerance deviations and ambient conditions influencing the sensors. Specifically, the method according to the invention is less vulnerable to such sensor deviations, compared to a method involving analysis of absolute sensor values or absolute values of an air intake related parameter based on sensor values. Thereby, the inventive method increases the degree of certainty regarding the diagnose information.

For this presentation, the air intake related parameter shall be understood as a parameter that can be used to derive a status of the engine air intake system. Preferably, the air intake related parameter is the volumetric efficiency of the engine. This is of considerable advantage, since the volumetric efficiency is closely related to the operation of the air intake manifold, and since it provides relevant information irrespective of engine operational settings and conditions, such as the throttle setting, fuel supply, and ignition setting.

As explained in detail below, the volumetric efficiency is determined based on values of the intake air temperature, the intake air mass flow, the engine speed, and the manifold absolute pressure. Alternatively, if the volumetric efficiency is based on values obtained exclusively at open throttle conditions, instead of the manifold absolute pressure, the atmospheric pressure can be used for determining the volumetric efficiency.

As an alternative to using volumetric efficiency as the air intake related parameter, the latter can be based on engine torque or engine output power, determined in manners known in the art. Thereby, the air intake related parameter should also be based on fuel flow and ignition as a function of the crankshaft angle.

Advantageous embodiments are defined in claims 3-6, and are more closely described below.

The object stated above is also reached with an internal combustion engine according to any of the claims 7-12.

DESCRIPTION OF THE FIGURES

Below, the invention will be described in greater detail with reference to the drawing, in which

- fig. 1 shows schematically parts of an internal combustion engine and a control system therefore,
- fig. 2 is a diagram of the volumetric efficiency as a function of engine speed concerning the engine in fig. 1,
- fig. 3, fig. 4 and fig. 5 are block diagrams depicting steps in methods in connection to the engine in fig. 1,
- fig. 6 shows schematically parts of an alternative internal combustion engine and a control system therefore,
- fig. 7 is a diagram of the volumetric efficiency as a function of engine speed concerning the engine in fig. 6, and
- fig. 8 and fig. 9 are block diagrams depicting steps in methods in connection to the engine in fig. 6.

DETAILED DESCRIPTION

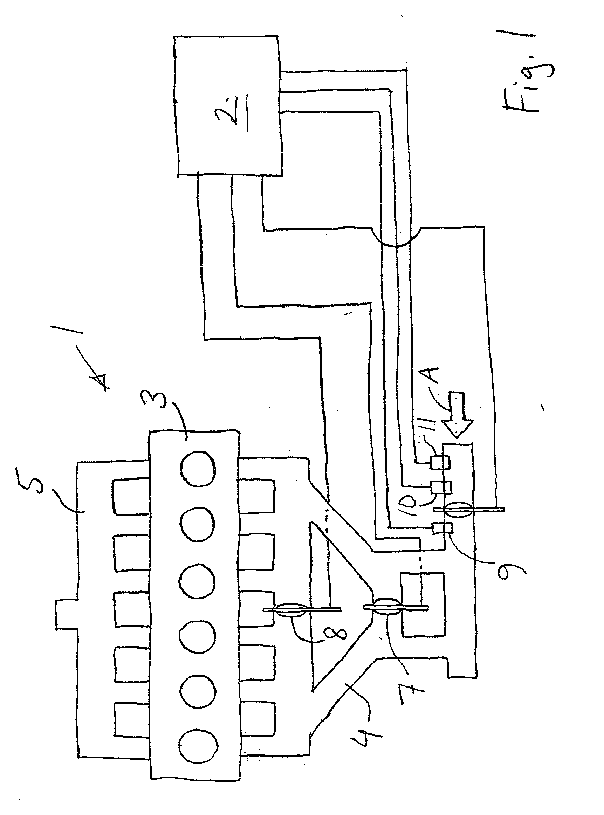

Fig. 1 shows schematically parts of an internal combustion engine 1. The engine comprises a cylinder block 3, in this example provided with six cylinders arranged in a line, a variable air intake manifold 4, an exhaust manifold 5 and engine control means 2. The engine control means 2, here also referred to as an engine control unit, ECU, is provided for controlling various functions of the engine 1. The ECU 2 can be provided as one physical unit, or several interconnected elements. In operation air is introduced in the intake manifold 4, as depicted by the arrow A, by the control of a throttle valve 6, in turn controlled by the ECU.

Downstream of the throttle valve 6 a pressure sensor 9 is provided and connected to the ECU 2 for providing values of the manifold absolute pressure (MAP). Upstream of the throttle valve 6 an airflow sensor 10, e.g. a thermal airflow meter as described in US6662640B2, is provided and connected to the ECU 2 for providing values of the mass air flow (MAF). Also, upstream of the throttle valve 6 a temperature sensor 11 is provided and connected to the ECU 2 for providing values of the intake air temperature (IAT). The sensors 9, 10, 11 are known in the art and not described further here.

The ECU can determine values of an air intake related parameter. In this embodiment, the air intake related parameter is the volumetric efficiency $n_{vol}$ of the engine, determined based partly on information obtained from the sensors 9, 10, 11, and according to the equation:

$$n_{vol} = IAT * MAF \ / \ (Ne * MAP)$$

where: IAT = intake air temperature, MAF = intake air mass flow, Ne = engine speed, and MAP = manifold absolute pressure.

The variable air intake manifold 4 is provided with a first and a second manifold valve 7, 8, each manoeuvrable by a respective actuator (not depicted in fig. 1), in turn connected to and controllable by the ECU 2. As is known in the art, by suitable control of the manifold valve settings, the effective length of manifold conduits can be selected depending on the engine speed, so that an advantageous volumetric efficiency can be provided at different engine speed intervals. More specifically, the effective length of manifold conduits can be selected so as to obtain a resonance, advantageous for the volumetric efficiency, in the manifold at more than one engine speed value.

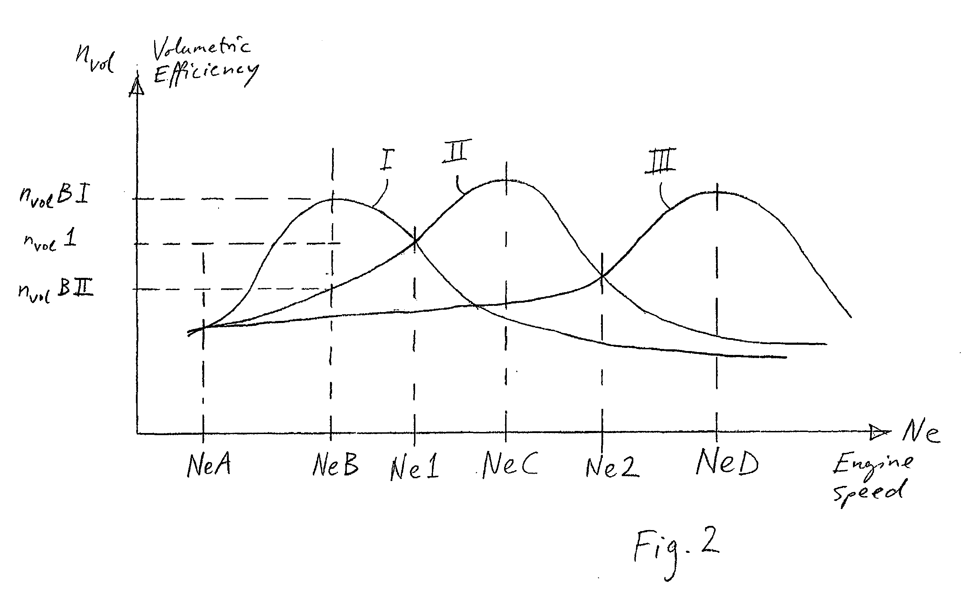

The variable air intake manifold 4 provides for three intake modes. Referring to fig. 2, the curve I presents the volumetric efficiency of the engine at a first intake mode, in which both manifold valves 7, 8 are closed. The curve II presents the volumetric efficiency at a second intake mode, in which the first manifold valve 7 is open and the second manifold valve 8 is closed. The curve III presents the volumetric efficiency at a third intake mode, in which both manifold valves 7, 8 are open.

The valves 7, 8 are operated to provide the greatest possible volumetric efficiency at each engine speed. Thereby, at engine speeds below a first threshold speed Ne1 the intake manifold 4 is set to the first intake mode (curve I), at engine speeds between the first threshold speed Ne1 and a second threshold speed Ne2 the intake manifold 4 is set to the second intake mode (curve II), and at engine speeds above the second threshold speed Ne2 the intake manifold 4 is set to the third intake mode (curve III).

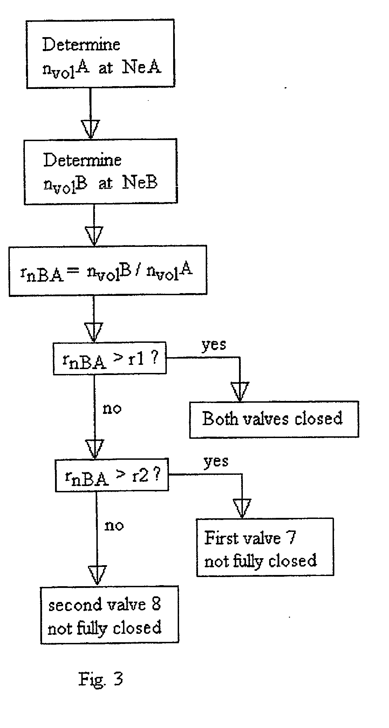

Referring to fig. 2 and fig. 3, the following steps are taken to establish a functional status of the variable air intake system in the first intake mode. More specifically the steps are take to establish whether both manifold valves 7, 8 are fully closed, and if any of them is not fully closed, to identify that valve. A first value $n_{vol}$ A of the volumetric efficiency at a first engine speed NeA, and a second value $n_{vol}$ B of the volumetric efficiency at a second engine speed NeB are determined. The second engine speed NeB is higher than the first engine speed NeA and within the engine speed interval of the first intake mode, i.e. below the first threshold speed Ne1.

By comparing the first and second values $n_{vol}$A, $n_{vol}$B of the volumetric efficiency, a relative value $r_{nBA}$ of the volumetric efficiency is determined as the efficiency ratio $r_{nBA} = n_{vol}B/n_{vol}A$. The efficiency ratio $r_{nBA}$ is compared to a first predetermined threshold value r1. If the efficiency ratio $r_{nBA}$ is larger than the first threshold value r1, it is determined that both manifold valves 7, 8 are fully closed, i.e. the variable intake system is in the correct mode.

Determining the relative value $r_{nBA}$ of the volumetric efficiency as a ratio between the first and second values $n_{vol}A$, $n_{vol}B$ of the volumetric efficiency is advantageous, since it makes any influence of sensor deviations very small.

The first threshold value r1 is determined based on a first reference value rBI related to a correct function of the variable air intake system, (in this example: both valves 7, 8 are closed), and on a second reference value rBII related to a non-correct function of the variable air intake system, (in this example: the first valve 7 is not fully closed). Referring to fig. 2, the first reference value rBI is determined as rBI = $n_{vol}$BI/$n_{vo}$ A, where $n_{vol}$BI is a value of the volumetric efficiency at the second engine speed NeB and at a correct function of the variable air intake system. The second reference value rBII is determined as rBII = $n_{vol}$BII/$n_{vol}$A, where $n_{vol}$BII is a value of the volumetric efficiency at the same engine speed NeB and at a non-correct function of the variable air intake system. Preferably, the first threshold value r1 is predetermined as the mean value of the first reference value rBI and the second reference value rBII. However, alternatively the first threshold value r1 can be chosen to be closer to any of the first or second values rBII, rBII. Nevertheless, chosing the first threshold value r1 too close to the first reference value rBI may cause a false error detection of a functional system. Also, a threshold value r1 being too close to the second reference value rBII may cause a risk that a system error passes undetected.

Referring again to fig. 3, if the efficiency ratio $r_{nBA}$ is smaller than the first threshold value r1, the efficiency ratio $r_{nBA}$ is compared to a second predetermined threshold value r2. The second threshold value r2 is determined in a manner corresponding to the first threshold value r1. This means that the second threshold value r2 is chosen based on predetermined information on the difference in the volumetric efficiency in a case were the first manifold valve 7 is not fully closed compared to a case where the second manifold valve 8 is not fully closed. In the latter case, the volumetric efficiency follows curve III in fig. 2. In the case where the first manifold valve 7 is not fully closed, but the second manifold valve 8 is fully closed, the volumetric efficiency follows curve II in fig. 2. The second threshold value r2 is chosen based on a volumetric efficiency value that lies between the volumetric efficiency values of curves II and III, at second engine speed NeB.

Thus, in this embodiment, if the efficiency ratio $r_{nBA}$ is smaller than the second threshold value r2, it is determined that the second manifold valve 8 is not fully closed. If the efficiency ratio $r_{nBA}$ is larger than the second threshold value r2, (but smaller than the first threshold value r1), it is determined that the first manifold valve 7 is not fully closed.

It should be noted that the second engine speed NeB is preferably chosen so as to give the largest possible difference regarding the efficiency ratio in a case of correct function of the air intake system compared to a case of malfunction thereof.

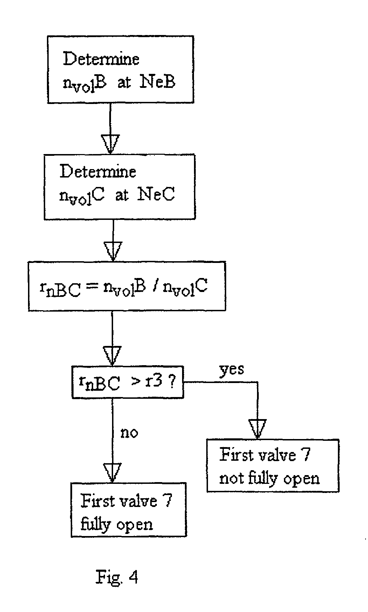

Referring to fig. 2 and fig. 4, the following steps are taken to check whether the first manifold valve 7 is fully open in the second intake mode. A first value $n_{vol}B$ of the volumetric efficiency at a first engine speed NeB, and a second value $n_{vol}C$ of the volumetric efficiency at a second engine speed NeC are determined. The first engine speed NeB is within the engine speed interval of the first intake mode, i.e. below the first threshold speed Ne1. The second engine speed NeC is higher than the first engine speed NeB and within the engine speed interval of the second intake mode, i.e. above the first threshold speed Ne1 and below the second threshold speed Ne2.

By comparing the first and second values $n_{vol}B$, $n_{vol}C$ of the volumetric efficiency, a relative value $r_{nBC}$ of the volumetric efficiency is determined as the efficiency ratio $r_{nBC} = n_{vol}B/n_{vol}C$. The efficiency ratio $r_{nBC}$ is compared to a third predetermined threshold efficiency ratio r3. If the efficiency ratio $r_{nBC}$ is larger than the third threshold value r3, it is determined that the first manifold valve 7 is not fully open. If the efficiency ratio $r_{nBC}$ is smaller than the third threshold value r3, it is determined that the first manifold valve 7 is fully open, as it should be.

The third threshold value r3 is predetermined in a manner corresponding to the establishment of the first threshold value r1, described above.

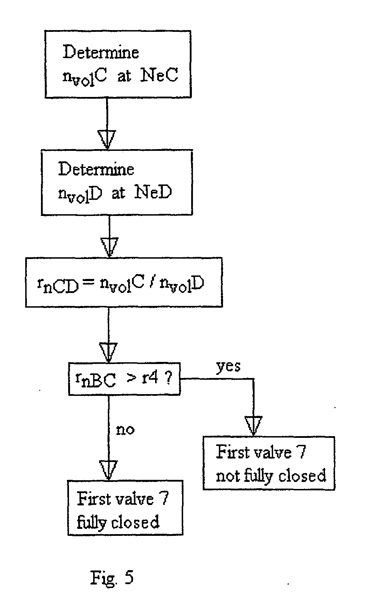

Referring to fig. 2 and fig. 5, the following steps are taken to check whether the second manifold valve 8 is fully open in the third intake mode. A first value $n_{vol}C$ of the volumetric efficiency at a first engine speed NeC, and a second value $n_{vol}D$ of the volumetric efficiency at a second engine speed NeD are determined. The first engine speed NeC is within the engine speed interval of the second intake mode, i.e. above the first threshold speed Ne1 and below the second threshold speed Ne2. The second engine speed NeD is higher than the first engine speed NeC and within the engine speed interval of the third intake mode, i.e. above the second threshold speed Ne2.

By comparing the first and second values $n_{vol}C$, $n_{vol}D$ of the volumetric efficiency, a relative value $r_{nCD}$ of the volumetric efficiency is determined as the efficiency ratio $r_{nCD} = n_{vol}C/n_{vol}D$. The efficiency ratio $r_{nCD}$ is compared to a fourth predetermined threshold efficiency ratio r4. If the efficiency ratio $r_{nCD}$ is larger than the fourth threshold value r4, it is determined that the second manifold valve 8 is not fully open. If the efficiency ratio $r_{nCD}$ is smaller than the fourth threshold value r4, it is determined that the second manifold valve 8 is fully open, as it should be.

The fourth threshold value r4 is predetermined in a manner corresponding to the establishment of the first threshold value r1, described above.

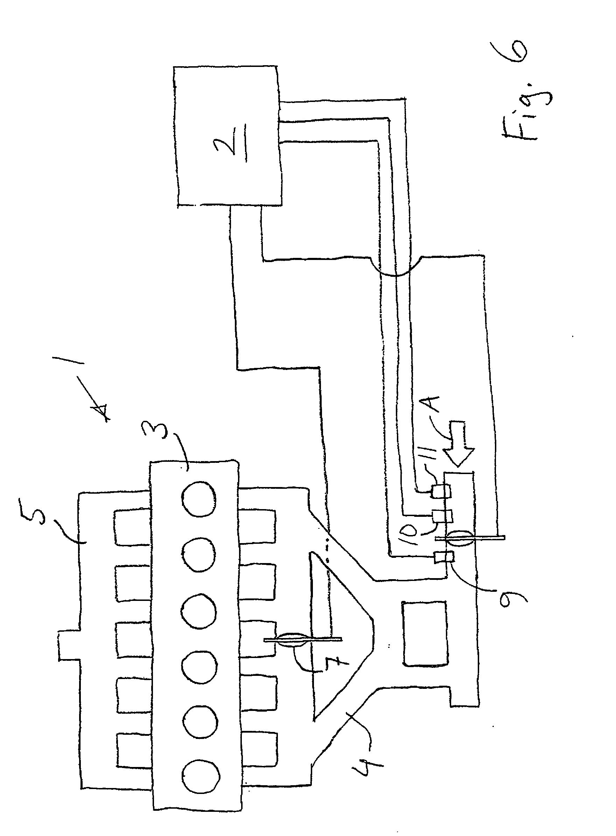

Above, an embodiment of the inventive method has been described in conjunction to a three mode air intake system. However, the invention is equally applicable to an air intake system with two intake modes, or a system with more than three intake modes. Below, an embodiment of the inventive method in conjunction to an air intake system with two intake modes is described in conjunction with fig. 6-9.

Fig. 6 shows schematically parts of an internal combustion engine 1 with engine control means, ECU 2, therefore, The engine has the same features as the one shown in fig. 1, but differs regarding the following:

The variable air intake manifold 4 is provided with a manifold valve 7, manoeuvrable by an actuator (not depicted in fig. 6), in turn connected to and controllable by the ECU 2. As is known in the art, by suitable control of the manifold valve 7 setting, the effective length of manifold conduits can be selected depending on the engine speed, so that an advantageous volumetric efficiency can be provided at different engine speed intervals.

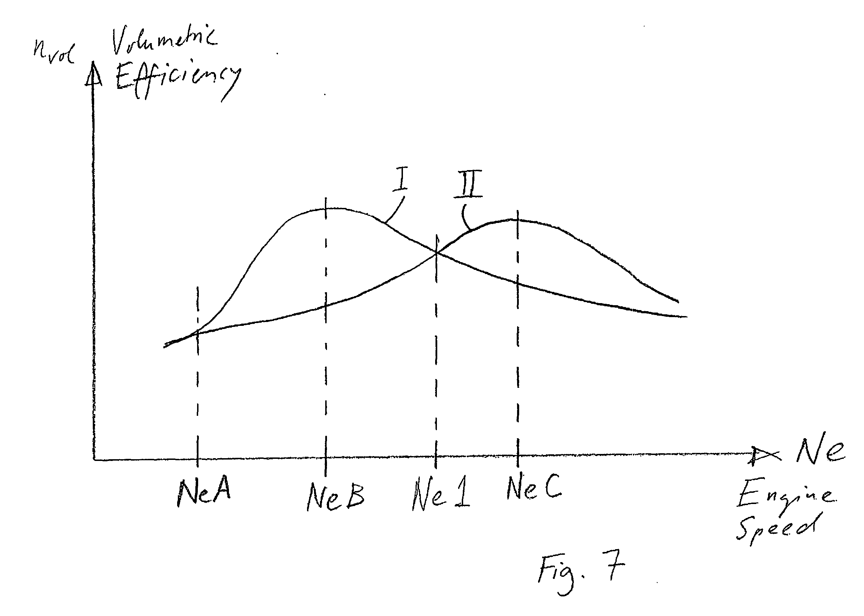

The variable air intake manifold 4 provides for two intake modes. Referring to fig. 7, the curve I presents the volumetric efficiency of the engine at a first intake mode, in which the manifold valve 7 is closed. The curve II presents the volumetric efficiency at a second intake mode, in which the manifold valve 7 is open. To provide for the greatest possible volumetric efficiency at each engine speed, at engine speeds below a threshold speed Ne1 the intake manifold 4 is set to the first intake mode (curve I), and at engine speeds above the threshold speed Ne1 the intake manifold 4 is set to the second intake mode (curve II).

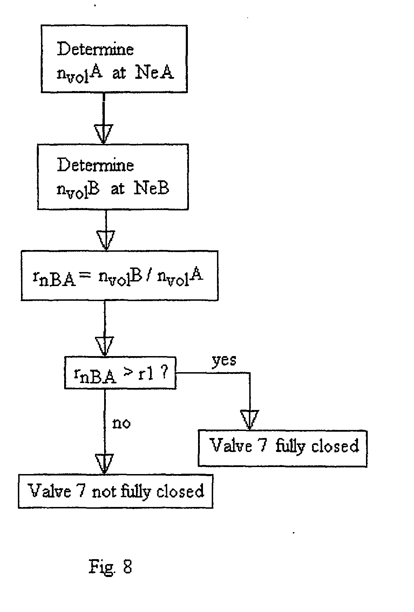

Referring to fig. 7 and fig. 8, steps taken to check whether the manifold valve 7 is fully closed in the first intake mode, correspond to the steps described above, with reference to fig. 2, to check whether both manifold valves 7, 8 are fully closed. Thus, a first and a second value $n_{vol}A$, $n_{vol}B$ of the volumetric efficiency at a first and second engine speed NeA, NeB, respectively, are determined.

An efficiency ratio $r_{nBA} = n_{vol}B/n_{vol}A$ is determined and compared to a first predetermined threshold efficiency ratio r1. The first threshold value r1 is predetermined in a manner corresponding to what has been described above. If the efficiency ratio $r_{nBA}$ is larger than the first threshold value r1, it is determined that the manifold valve 7 is fully closed, as it should be. If the efficiency ratio $r_{nBA}$ is smaller than the first threshold value r1, it is determined that the manifold valve 7 is not fully closed.

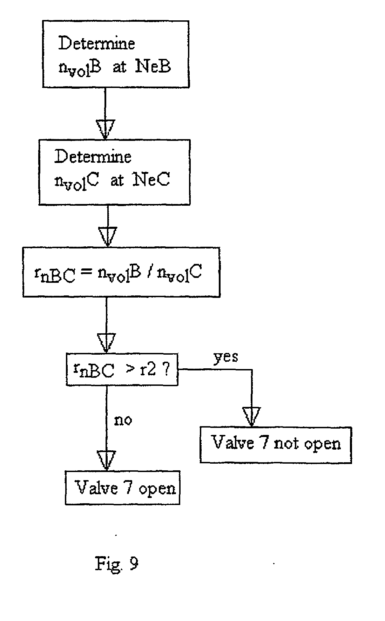

Referring to fig. 7 and fig. 9, the following steps are taken to check whether the manifold valve 7 is open in the second intake mode. A first and a second value $n_{vol}B$, $n_{vol}C$ of the volumetric efficiency at a first and second engine speed NeB, NeC, respectively, are determined. The first engine speed NeB is within the engine speed interval of the first intake mode, and the second engine speed NeC is within the engine speed interval of the second intake mode.

An efficiency ratio $r_{nBC} = n_{vol}B/n_{vol}C$ is determined and compared to a second predetermined threshold efficiency ratio r2. The second threshold value r2 is predetermined in a manner corresponding to what has been described above. If the efficiency ratio $r_{nBC}$ is larger than the second threshold value r2, it is determined that the manifold valve 7 is not open.

Above, comparing the first and second values of the volumetric efficiency has been described as comprising determining a relative value $r_{nAB}$, $r_{nBC}$, $r_{nCD}$ of the volumetric efficiency as the efficiency ratio $r_{nAB}=n_{vol}A/n_{vol}B$, $r_{nBC}=n_{vol}B/n_{vol}C$ and $r_{nCD}=n_{vol}C/n_{vol}D$, respectively. However, alternatives are possible for the comparison of the first and second values of the volumetric efficiency. For example, said comparison could comprise determining a relative value of the volumetric efficiency as the efficiency difference $r_{nAB}=n_{vol}A - n_{vol}B$, $r_{nBC}=n_{vol}B - n_{vol}C$ and $r_{nCD} =n_{vol}C - n_{vol}D$, respectively.

## Claims

1. A method for diagnosing a variable air intake system (4, 7, 8) of an internal combustion engine (1), comprising the steps of

 - determining a first value ($n_{vol}$ A, $n_{vol}$ B, $n_{vol}$ C) of an air intake related parameter at a first engine speed (NeA, NeB, NeC),
 - determining a second value ($n_{vol}$B, $n_{vol}$C, $n_{vol}$D) of the air intake related parameter at a second engine speed (NeB, NeC, NeD),
 - comparing the first and second determined values ($n_{vol}$A, $n_{vol}$B, $n_{vol}$C, $n_{vol}$D) of the air intake related parameter, and
 - establishing, based on the comparison of the first and second values ($n_{vol}$ A, $n_{vol}$B, $n_{vol}$C, $n_{vol}$D) of the air intake related parameter, a functional status of the variable air intake system,
 - said method being **characterized in that** the air intake related parameter is the volumetric efficiency of the engine.

2. A method according to any of the preceding claims, wherein the functional status of the variable air intake system refers to the functional status of at least one valve (7, 8) in the variable intake system.

3. A method according to any of the preceding claims, wherein the step of comparing the first and second values ($n_{vol}$A, $n_{vol}$ B, $n_{vol}$ C, $n_{vol}$ D) of the air intake related parameter comprises determining a relative value ($r_{nAB}$, $r_{nBC}$, $r_{nCD}$) of the air intake related parameter, based on the first and second values ($n_{vol}$ A, $n_{vol}$ B, $n_{vol}$ C, $n_{vol}$ D) of the air intake related parameter, the method further comprising the step of comparing the relative value ($r_{nAB}$, $r_{nBC}$, $r_{nCD}$) of the air intake related parameter to a predetermined threshold value (r1, r2, r3, r4).

4. A method according to claim 3, wherein the step of determining a relative value ($r_{nAB}$, $r_{nBC}$, $r_{nCD}$) of the air intake related parameter, comprises determining the relative value ($r_{nAB}$, $r_{nBC}$, $r_{nCD}$) of the air intake related parameter as a ratio between the first and second values ($n_{vol}$A, $n_{vol}$ B, $n_{vol}$ C, $n_{vol}$ D) of the air intake related parameter.

5. A method according to claim 3 or 4, wherein the threshold value (r1, r2, r3, r4) is dependent on a value ($n_{vol}$ BI) of the air intake related parameter at a correct function of the variable air intake system, and on a value ($n_{vol}$BII) of the air intake related parameter at a non-correct function of the variable air intake system.

6. An internal combustion engine comprising a variable air intake system (4, 7, 8) and engine control means (2), said engine control means (2) being adapted to determine a first value ($n_{vol}$ A, $n_{vol}$ B, $n_{vol}$ C) of an air intake related parameter, which can be used to derive a status of the engine air intake system, at a first engine speed (NeA, NeB, NeC), and a second value ($n_{vol}$B, $n_{vol}$ C, $n_{vol}$D) of the air intake related parameter at a second engine speed (NeB, NeC, NeD), and in that the engine control means (2) is further adapted to compare the first and second values of the air intake related parameter, and to establish, based on the comparison of the first and second values ($n_{vol}$ A, $n_{vol}$ B, $n_{vol}$ C, $n_{vol}$ D) of the air intake related parameter, a functional status of the variable air intake system, **characterized in that** the engine control means is arranged to use the volumetric efficiency of the engine as the air intake related parameter.

7. An internal combustion engine according to claim 6, wherein the functional status of the variable air intake system refers to the functional status of at least one valve (7, 8) in the variable intake system.

8. An internal combustion engine according to claim 6 or 7, wherein the engine control means (2) is adapted to determine a relative value ($r_{nAB}$, $r_{nBC}$, $r_{nCD}$) of the air intake related parameter, based on the first and second values ($n_{vol}$ A, $n_{vol}$ B, $n_{vol}$ C, $n_{vol}$ D) of the air intake related parameter, the engine control means (2) further being adapted to compare the relative value ($r_{nAB}$, $r_{nBC}$, $r_{nCD}$) of the air intake related parameter to a predetermined threshold value (r1, r2, r3, r4).

9. An internal combustion engine according to claim 8, wherein the engine control means (2) is adapted to determine the relative value ($r_{nAB}$, $r_{nBC}$, $r_{nCD}$) of the air intake related parameter as a ratio between the first and second values ($n_{vol}$ A, $n_{vol}$ B, $n_{vol}$ C, $n_{vol}$ D) of the air intake related parameter.

10. An internal combustion engine according to claim 8 or 9, wherein the threshold value (r1, r2, r3, r4) is dependent on a value ($n_{vol}$BI) of the air intake related parameter at a correct function of the variable air intake system, and the second reference value (rBII) is dependent on a value ($n_{vol}$ BII) of the air intake related parameter at a non-correct function of the variable air intake system.

**Patentansprüche**

1. Verfahren zum Diagnostizieren eines variablen Luftansaugsystems (4, 7, 8) einer Brennkraftmaschine (1), die folgenden Schritte umfassend:

Bestimmen eines ersten Werts ($nvol$A, $n_{vol}$B, $n_{vol}$C) eines auf Ansaugluft bezogenen Parameters bei einer ersten Motorgeschwindigkeit (NeA, NeB, NeC),
Bestimmen eines zweiten Werts ($n_{vol}$B, $n_{vol}$C, $n_{vol}$D) des auf Ansaugluft bezogenen Parameters bei einer zweiten Motorgeschwindigkeit (NeB, NeC, NeD),

Vergleichen der ersten und zweiten bestimmten Werte ($n_{vol}$A, $n_{vol}$B, $n_{vol}$C, $n_{vol}$D) des auf Ansaugluft bezogenen Parameters, und
Bilden, basierend auf dem Vergleich der ersten und zweiten Werte ($n_{vol}$A, $n_{vol}$B, $n_{vol}$C, n$_{vol}$D) des auf Ansaugluft bezogenen Parameters, eines funktionellen Status des variablen Luftansaugsystems,
wobei das Verfahren **dadurch gekennzeichnet ist, dass** der auf Ansaugluft bezogene Parameter der Füllungsgrad des Motors ist.

2. Verfahren nach einem der vorhergehenden Ansprüche, wobei sich der funktionelle Status des variablen Luftansaugsystems auf den funktionellen Status von zumindest einem Ventil (7, 8) in dem variablen Ansaugsystem bezieht.

3. Verfahren nach einem der vorhergehenden Ansprüche, wobei der Schritt des Vergleichens der ersten und zweiten Werte ($n_{vol}$A, $n_{vol}$B, $n_{vol}$C, $n_{vol}$D) des auf Ansaugluft bezogenen Parameters das Bestimmen eines relativen Werts ($r_{nAB}$, $r_{nBC}$, $r_{nCD}$) des auf Ansaugluft bezogenen Parameters umfasst, basierend auf den ersten und zweiten Werten ($n_{vol}$A, $n_{vol}$B, $n_{vol}$C, $n_{vol}$D) des auf Ansaugluft bezogenen Parameters, wobei das Verfahren ferner den Schritt des Vergleichens des relativen Werts ($r_{nAB}$, $r_{nBC}$, $r_{nCD}$) des auf Ansaugluft bezogenen Parameters mit einem vorbestimmten Schwellenwert (r1, r2, r3, r4) umfasst.

4. Verfahren nach Anspruch 3, wobei der Schritt des Bestimmens eines relativen Werts ($r_{nAB}$, $r_{nBC}$, $r_{nCD}$) des auf Ansaugluft bezogenen Parameters das Bestimmen des relativen Werts ($r_{nAB}$, $r_{nBC}$, $r_{nCD}$) des auf Ansaugluft bezogenen Parameters als ein Verhältnis zwischen den ersten und zweiten Werten ($n_{vol}$A, $n_{vol}$B, $n_{vol}$C, $n_{vol}$D) des auf Ansaugluft bezogenen Parameters umfasst.

5. Verfahren nach Anspruch 3 oder 4, wobei der Schwellenwert (r1, r2, r3, r4) von einem Wert ($n_{vol}$BI) des auf Ansaugluft bezogenen Parameters abhängt, bei einer richtigen Funktion des variablen Luftansaugsystems, und von einem Wert ($n_{vol}$BII) des auf Ansaugluft bezogenen Parameters, bei einer nicht richtigen Funktion des variablen Luftansaugsystems.

6. Brennkraftmaschine mit einem variablen Luftansaugsystem (4, 7, 8) und einer Motorsteuereinrichtung (2), wobei die Motorsteuereinrichtung (2) geeignet ist, einen ersten Wert ($nvol$A, $nvol$B, $n_{vol}$C) eines auf Ansaugluft bezogenen Parameters zu bestimmen, der verwendet werden kann, um einen Status des Motor-Luftansaugsystems abzuleiten, bei einer ersten Motorgeschwindigkeit (NeA, NeB, NeC), und einen zweiten Wert ($n_{vol}$B, $n_{vol}$C, $n_{vol}$D) des auf Ansaugluft bezogenen Parameters bei einer zweiten Motorgeschwindigkeit (NeB, NeC, NeD), und wobei die Motorsteuereinrichtung (2) ferner geeignet ist, die ersten und zweiten Werte des auf Ansaugluft bezogenen Parameters zu vergleichen, und, basierend auf dem Vergleich der ersten und zweiten Werte ($n_{vol}$A, $n_{vol}$B, $n_{vol}$C, -$n_{vol}$D) des auf Ansaugluft bezogenen Parameters, einen funktionellen Status des variablen Luftansaugsystems zu bilden, **dadurch gekennzeichnet, dass** die Motorsteuereinrichtung angeordnet ist, um den Füllungsgrad des Motors als den auf Ansaugluft bezogenen Parameter zu verwenden.

7. Brennkraftmaschine nach Anspruch 6, wobei sich der funktionelle Status des variablen Luftansaugsystems auf den funktionellen Status von zumindest einem Ventil (7, 8) in dem variablen Ansaugsystem bezieht.

8. Brennkraftmaschine nach Anspruch 6 oder 7, wobei die Motorsteuereinrichtung (2) geeignet, einen relativen Wert ($r_{nAB}$, $r_{nBC}$, $r_{nCD}$) des auf Ansaugluft bezogenen Parameters zu bestimmen, basierend auf den ersten und zweiten Werten ($nvol$A, $nvol$B, $nvol$C, $nvol$D) des auf Ansaugluft bezogenen Parameters, wobei die Motorsteuereinrichtung (2) ferner geeignet ist, den relativen Wert ($r_{nAB}$, $r_{nBC}$, $r_{nCD}$) des auf Ansaugluft bezogenen Parameters mit einem vorbestimmten Schwellenwert (r1, r2, r3, r4) zu vergleichen.

9. Brennkraftmaschine nach Anspruch 8, wobei die Motorsteuereinrichtung (2) geeignet ist, den relativen Wert ($r_{nAB}$, $r_{nBC}$, $r_{nCD}$) des auf Ansaugluft bezogenen Parameters als ein Verhältnis zwischen den ersten und zweiten Werten ($n_{volA}$, $n_{vol}$B, $n_{vol}$C, $n_{vol}$D) des auf Ansaugluft bezogenen Parameters zu bestimmen.

10. Brennkraftmaschine nach Anspruch 8 oder 9, wobei der Schwellenwert (r1, r2, r3, r4) von einem Wert ($nvol$BI) des auf Ansaugluft bezogenen Parameters abhängt, bei einer richtigen Funktion des variablen Luftansaugsystems, und der zweite Bezugswert (rBII) von einem Wert ($n_{vol}$BII) des auf Ansaugluft bezogenen Parameters abhängt, bei einer nicht richtigen Funktion des variablen Luftansaugsystems.

**Revendications**

1. Procédé pour établir un diagnostic dans un système d'admission d'air variable (4, 7, 8) d'un moteur à combustion interne (1), comprenant les étapes suivantes :

- on détermine une première valeur ($n_{vol}$ A, $n_{vol}$ B, $n_{vol}$ C) d'un paramètre relatif à l'admission d'air à une première vitesse de moteur (NeA, NeB, NeC),

- on détermine une seconde valeur ($n_{vol}$ B, $n_{vol}$ C, $n_{vol}$ D) du paramètre relatif à l'admission d'air à une seconde vitesse de moteur (NeB, NeC, NeD),

- on compare les première et seconde valeurs déterminées ($n_{vol}$ A, $n_{vol}$ B, $n_{vol}$ C, $n_{vol}$ D) du paramètre relatif à l'admission d'air, et

- on établit, sur la base de la comparaison des première et seconde valeurs ($n_{vol}$ A, $n_{vol}$ B, $n_{vol}$ C, $n_{vol}$ D) du paramètre relatif à l'admission d'air, un état de fonctionnement du système d'admission d'air variable,

- ledit procédé étant **caractérisé en ce que** le paramètre relatif à l'admission d'air est le rendement volumétrique du moteur.

2. Procédé selon l'une quelconque des revendications précédentes, dans lequel l'état de fonctionnement du système d'admission d'air variable se réfère à l'état de fonctionnement d'au moins une soupape (7, 8) du système d'admission variable.

3. Procédé selon l'une quelconque des revendications précédentes, dans lequel l'étape de comparaison des première et seconde valeurs ($n_{vol}$ A, $n_{vol}$ B, $n_{vol}$C, $n_{vol}$ D) du paramètre d'admission d'air comprend la détermination d'une valeur relative ($r_{nAB}$, $r_{nBC}$, $r_{nCD}$) du paramètre d'admission d'air, par rapport aux première et seconde valeurs ($n_{vol}$A, $n_{vol}$B, $n_{vol}$C, $n_{vol}$D) du paramètre d'admission d'air, le procédé comprenant en outre l'étape de comparaison de la valeur relative ($r_{nAB}$, $r_{nBC}$, $r_{nCD}$) du paramètre d'admission d'air avec une valeur de seuil prédéterminée (r1, r2, r3, r4).

4. Procédé selon la revendication 3, dans lequel l'étape de détermination d'une valeur relative ($r_{nAB}$, $r_{nBC}$, $r_{nCD}$) du paramètre relatif à l'admission d'air, comprend la détermination de la valeur relative ($r_{nAB}$, $r_{nBC}$, $r_{nCD}$) du paramètre relatif à l'admission d'air sous la forme d'un rapport entre les première et seconde valeurs ($n_{vol}$ A, $n_{vol}$ B, $n_{vol}$ C, $n_{vol}$ D) du paramètre relatif à l'admission d'air.

5. Procédé selon la revendication 3 ou 4, dans lequel la valeur de seuil (r1, r2, r3, r4) dépend d'une valeur ($n_{vol}$BI) du paramètre relatif à l'admission d'air lors d'un fonctionnement correct du système d'admission d'air variable et d'une valeur ($n_{vol}$ BII) du paramètre relatif à l'admission d'air lors d'un fonctionnement incorrect du système d'admission d'air variable.

6. Moteur à combustion interne comprenant un système d'admission d'air variable (4, 7, 8) et un moyen de commande de moteur (2), ledit moyen de commande de moteur (2) étant à même de déterminer une première valeur ($n_{vol}$ A, $n_{vol}$ B, $n_{vol}$ C) d'un paramètre relatif à l'admission d'air, qui peut être utilisé pour obtenir un état du système d'admission d'air du moteur, à une première vitesse du moteur (NeA, NeB, NeC), et une seconde valeur ($n_{vol}$ B, $n_{vol}$ C, $n_{vol}$ D) du paramètre relatif à l'admission d'air à une seconde vitesse du moteur (NeB, NeC, NeD), et le moyen de commande du moteur (2) étant en outre à même de comparer les première et seconde valeurs du paramètre relatif à l'admission d'air et d'établir, sur la base de la comparaison des première et seconde valeurs ($n_{vol}$ A, $n_{vol}$B, $n_{vol}$C, $n_{vol}$D) du paramètre relatif à l'admission d'air, un état de fonctionnement du système d'admission d'air variable, **caractérisé en ce que** le moyen de commande du moteur est aménagé de manière à utiliser le rendement volumétrique du moteur comme paramètre relatif à l'admission d'air.

**7.** Moteur à combustion interne selon la revendication 6, dans lequel l'état de fonctionnement du système d'admission d'air variable se réfère à l'état de fonctionnement d'au moins une soupape (7, 8) dans le système d'admission variable.

**8.** Moteur à combustion interne selon la revendication 6 ou 7, dans lequel le moyen de commande du moteur (2) est à même de déterminer une valeur relative ($r_{nAB}$, $r_{nBC}$, $r_{nCD}$) du paramètre relatif à l'admission d'air, par rapport aux première et seconde valeurs ($n_{vol}$ A, $n_{vol}$ B, $n_{vol}$ C, $n_{vol}$ D) du paramètre relatif à l'admission d'air, le moyen de commande du moteur (2) étant en outre à même de comparer la valeur relative ($r_{nAB}$, $r_{nBC}$, $r_{nCD}$) du paramètre relatif à l'admission d'air avec une valeur de seuil prédéterminée (r1, r2, r3, r4).

**9.** Moteur à combustion interne selon la revendication 8, dans lequel le moyen de commande du moteur (2) est à même de déterminer la valeur relative ($r_{nAB}$, $r_{nBC}$, $r_{nCD}$) du paramètre relatif à l'admission d'air sous la forme d'un rapport entre les première et seconde valeurs ($n_{vol}$ A, $n_{vol}$ B, $n_{vol}$ C, $n_{vol}$ D) du paramètre relatif à l'admission d'air.

**10.** Moteur à combustion interne selon la revendication 8 ou 9, dans lequel la valeur de seuil (r1, r2, r3, r4) dépend d'une valeur ($n_{vol}$BI) du paramètre relatif à l'admission d'air lors d'un fonctionnement correct du système d'admission d'air variable et la seconde valeur de référence (rBII) dépend d'une valeur ($n_{vol}$BII) du paramètre relatif à l'admission d'air lors d'un fonctionnement incorrect du système d'admission d'air variable.

Fig. 1

Fig. 2

EP 1 770 258 B1

```
┌─────────────────┐
│ Determine       │
│ n_vol A  at  NeA │
└─────────────────┘
         │
         ▽
┌─────────────────┐
│ Determine       │
│ n_vol B  at  NeB │
└─────────────────┘
         │
         ▽
┌───────────────────────┐
│ r_nBA = n_vol B / n_vol A │
└───────────────────────┘
         │
         ▽
┌──────────────┐        yes
│ r_nBA > r1 ?  ├──────────────┐
└──────────────┘               │
         │                     ▽
        no            ┌─────────────────────┐
         │            │ Both valves closed  │
         ▽            └─────────────────────┘
┌──────────────┐        yes
│ r_nBA > r2 ?  ├──────────────┐
└──────────────┘               │
         │                     ▽
        no            ┌─────────────────────┐
         │            │ First valve 7       │
         ▽            │ not fully closed    │
┌─────────────────┐   └─────────────────────┘
│ second valve 8  │
│ not fully closed│
└─────────────────┘
```

Fig. 3

Determine
$n_{vol}B$ at NeB

Determine
$n_{vol}C$ at NeC

$r_nBC = n_{vol}B / n_{vol}C$

$r_nBC > r3$ ?

yes

no

First valve 7
not fully open

First valve 7
fully open

Fig. 4

Fig. 5

Fig. 6

Fig. 7

EP 1 770 258 B1

Determine
$n_{vol}A$ at NeA

Determine
$n_{vol}B$ at NeB

$r_nBA = n_{vol}B / n_{vol}A$

$r_nBA > r1$ ?

yes

no

Valve 7 fully closed

Valve 7 not fully closed

Fig. 8

Determine
$n_{vol}B$ at NeB

$\triangledown$

Determine
$n_{vol}C$ at NeC

$\triangledown$

$r_{n}BC = n_{vol}B \,/\, n_{vol}C$

$\triangledown$

$r_{n}BC > r2\,?$ — yes

no

$\triangledown$ Valve 7 not open

$\triangledown$

Valve 7 open

Fig. 9

17

**EP 1 770 258 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5138874 A
- US 5638785 A
- US 6662640 B2